# DEMANDE DE BREVET EUROPEEN

(11) **EP 2 670 119 A1**
(43) Date de publication de la demande: **04.12.2013**
(21) Numéro de dépôt: 12305595.6
(22) Date de dépôt: 30.05.2012
(51) Int. Cl.: H04M 3/42, H04M 3/428

(54) **Message de fil d'attente personnalisé selon l'appelant**

(71) Demandeur: Alcatel Lucent, 75007 Paris (FR)
(72) Inventeur: Cottin, Pascal, 35000 RENNES (FR); Tardivel, David, 35000 RENNES (FR)
(74) Mandataire: Mouney, Jérôme

(57) **Abrégé**

Pour contrôler un temps d'attente pour un utilisateur d'un dispositif de communication (DC) communiquant avec un centre de service (CS) pour accéder à un service fourni via le centre de service, ce dernier ouvre une session d'utilisateur et place l'utilisateur dans une file d'attente, suite à une connexion établie entre le dispositif de communication et le centre de service, récupère un identificateur (IdU) de l'utilisateur, et transmet une requête comprenant l'identificateur d'utilisateur à un serveur d'application (SA).

Le serveur d'application détermine alors dans une table de correspondance (TC) un profil d'utilisateur (PrU) associé à l'identificateur d'utilisateur reçu, détermine un identificateur de un contenu multimédia en fonction du profil d'utilisateur et transmet l'identificateur de contenu multimédia au serveur de média (SM) pour mettre à disposition le contenu multimédia identifié au dispositif de communication. Le serveur d'application transmet une réponse comprenant des paramètres de communication centre de service, afin que ce dernier invite le dispositif de communication (DC) à établir une communication avec le serveur de média (SM) apte à fournir le contenu multimédia au dispositif de communication (DC) pendant que l'utilisateur est dans la file d'attente.

## Description

La présente invention concerne un contrôle de l'attente d'un utilisateur pour accéder à un service fourni via un centre de service.

Actuellement; lorsqu'un utilisateur souhaite accéder à un service fourni via un centre de service, tel qu'un centre d'appel, l'utilisateur est placé en file d'attente et doit écouter des musiques ou publicités fournies par le centre d'appel.

Ce temps d'attente peut-être long et susceptible d'agacer l'utilisateur qui peut couper la communication avec le centre d'appel.

Afin de remédier aux inconvénients précités, un procédé pour contrôler un temps d'attente pour un utilisateur d'un dispositif de communication communiquant avec un centre de service à travers un réseau de télécommunications pour accéder à un service fourni via le centre de service, comprend les étapes suivantes dans le centre de service:
suite à une connexion établie entre le dispositif de communication et le centre de service, ouvrir une session d'utilisateur et placer l'utilisateur dans une file d'attente,
récupérer un identificateur de l'utilisateur,
transmettre une requête comprenant l'identificateur d'utilisateur à un serveur d'application, afin que le serveur d'application détermine dans une table de correspondance un profil d'utilisateur associé à l'identificateur d'utilisateur reçu, détermine un identificateur de contenu multimédia en fonction du profil d'utilisateur et transmette l'identificateur de contenu multimédia au serveur de média pour mettre à disposition le contenu multimédia identifié au dispositif de communication,
recevoir une réponse comprenant des paramètres de communication depuis le serveur d'application,
inviter le dispositif de communication à établir une communication avec le serveur de média apte à fournir le contenu multimédia au dispositif de communication pendant que l'utilisateur est dans la file d'attente.

Avantageusement, l'invention permet à un utilisateur qui a été placé en file d'attente de profiter de contenus multimédias personnalisés, par exemple en écoutant des résultats sportifs ou un horoscope au lieu d'une musique cyclique fournie par le centre d'appel.

Le temps d'attente paraît ainsi moins long pour l'utilisateur, ce qui accroît la satisfaction de ce dernier par rapport à la société gérant le centre de service. Par ailleurs, l'utilisateur peut avoir l'impression également de ne pas avoir perdu de temps lors de l'attente puisqu'il a pu accéder à un contenu multimédia qu'il a préalablement sélectionné ou à un type de contenu multimédia qu'il a souhaité.

En outre, l'invention offre à la société une meilleure connaissance de ses clients grâce aux contenus multimédias préalablement sélectionnés par les utilisateurs, ce qui permet de compléter des profils d'utilisateur existants.

Selon une autre caractéristique de l'invention, la requête contient en outre des informations sur des capacités du dispositif de communication et le serveur d'application transmet en outre lesdites informations sur les capacités du dispositif de communication au serveur de média afin que ce dernier adapte le contenu multimédia aux capacités du dispositif de communication.

L'invention concerne également un procédé pour contrôler un temps d'attente pour un utilisateur d'un dispositif de communication communiquant avec un centre de service à travers un réseau de télécommunications pour accéder à un service fourni via le centre de service, le procédé comprenant les étapes suivantes dans un serveur d'application relié au centre de service:
suite à une connexion établie entre le dispositif de communication et le centre de service, après que le centre de service a ouvert une session d'utilisateur, placé l'utilisateur dans une file d'attente, et récupéré un identificateur de l'utilisateur, recevoir une requête depuis le centre de service, la requête comprenant l'identificateur d'utilisateur,
déterminer dans une table de correspondance un profil d'utilisateur associé à l'identificateur d'utilisateur reçu et déterminer un identificateur de contenu multimédia en fonction du profil d'utilisateur,
transmettre l'identificateur de contenu multimédia au serveur de média pour mettre à disposition le contenu multimédia identifié au dispositif de communication,
transmettre une réponse comprenant des paramètres de communication au centre de service, afin que ce dernier invite le dispositif de communication à établir une communication avec le serveur de média apte à fournir le contenu multimédia au dispositif de communication pendant que l'utilisateur est dans la file d'attente.

Selon une autre caractéristique de l'invention, le serveur d'application transmet en outre une information de géolocalisation au serveur de média afin que ce dernier sélectionne un contenu multimédia en fonction de l'information de géolocalisation.

Selon une autre caractéristique de l'invention, la requête comprend en outre un identificateur de la société gérant le centre de service, et le profil d'utilisateur déterminé est en outre associé à l'identificateur de la société dans la table de correspondance.

L'invention concerne également un centre de service pour contrôler un temps d'attente pour un utilisateur d'un dispositif de communication communiquant avec le centre de service à travers un réseau de télécommunications pour accéder à un service fourni via le centre de service, le centre de service comprenant :
des moyens pour ouvrir une session d'utilisateur et placer l'utilisateur dans une file d'attente, suite à une connexion établie entre le dispositif de communication et le centre de service,
des moyens pour récupérer un identificateur de l'utilisateur,
des moyens pour transmettre une requête comprenant l'identificateur d'utilisateur à un serveur d'application, afin que le serveur d'application détermine dans une table de correspondance un profil d'utilisateur associé à l'identificateur d'utilisateur reçu, détermine un identificateur de contenu multimédia en fonction du profil d'utilisateur et transmette l'identificateur de contenu multimédia au serveur de média pour mettre à disposition le contenu multimédia identifié au dispositif de communication,
des moyens pour recevoir une réponse comprenant des paramètres de communication depuis le serveur d'application,
des moyens pour inviter le dispositif de communication à établir une communication avec le serveur de média apte à fournir le contenu multimédia au dispositif de communication pendant que l'utilisateur est dans la file d'attente.

Selon une autre caractéristique de l'invention, centre de service est un centre d'appel ou un serveur web.

L'invention concerne également un serveur d'application pour contrôler un temps d'attente pour un utilisateur d'un dispositif de communication communiquant avec un centre de service à travers un réseau de télécommunications pour accéder à un service fourni via le centre de service, le serveur d'application étant relié au centre de service et comprenant :
des moyens pour recevoir une requête depuis le centre de service, suite à une connexion établie entre le dispositif de communication et le centre de service, après que le centre de service a ouvert une session d'utilisateur, placé l'utilisateur dans une file d'attente, et récupéré un identificateur de l'utilisateur, la requête comprenant l'identificateur d'utilisateur,
des moyens pour déterminer dans une table de correspondance un profil d'utilisateur associé à l'identificateur d'utilisateur reçu et déterminer un identificateur de contenu multimédia en fonction du profil d'utilisateur,
des moyens pour transmettre l'identificateur de contenu multimédia au serveur de média pour mettre à disposition le contenu multimédia identifié au dispositif de communication,
des moyens pour transmettre une réponse comprenant des paramètres de communication au centre de service, afin que ce dernier invite le dispositif de communication à établir une communication avec le serveur de média apte à fournir le contenu multimédia au dispositif de communication pendant que l'utilisateur est dans la file d'attente.

L'invention se rapporte encore à un programme d'ordinateur apte à être mis en oeuvre dans un centre de service, ledit programme comprenant des instructions qui, lorsque le programme est exécuté dans ledit centre de service, réalisent les étapes selon le procédé de l'invention.

L'invention se rapporte encore à un programme d'ordinateur apte à être mis en oeuvre dans un serveur d'application, ledit programme comprenant des instructions qui, lorsque le programme est exécuté dans ledit serveur d'application, réalisent les étapes selon le procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un bloc-diagramme schématique d'un système de communication selon une réalisation de l'invention, et
- la figure 2 est un algorithme d'un procédé de contrôle de l'attente d'un utilisateur pour accéder à un service fourni via un centre de service selon une réalisation de l'invention.

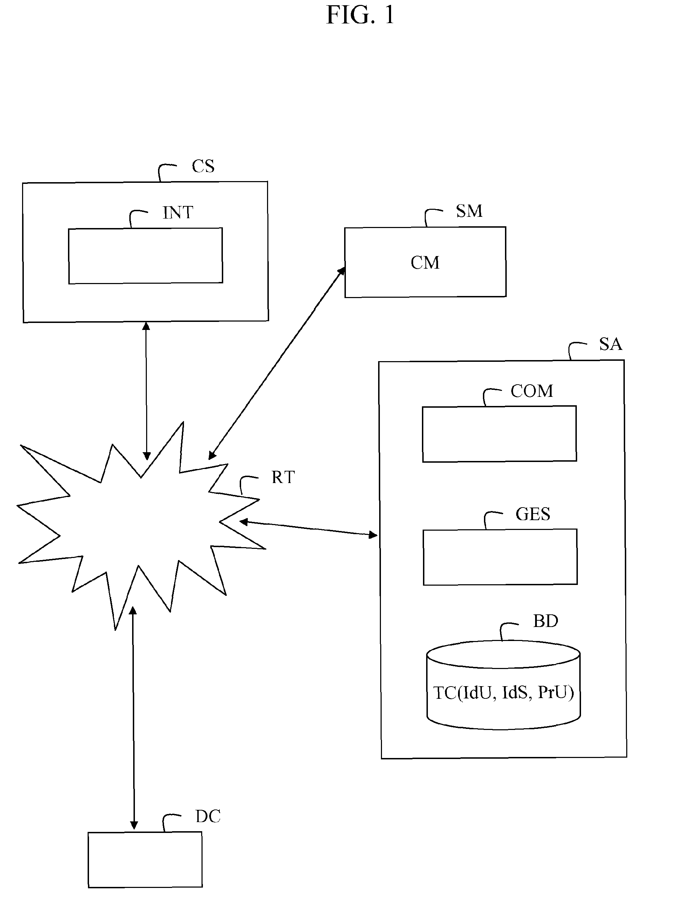

En référence à la figure 1, un système de communication comprend au moins un centre de service CS, un serveur d'application SA, un serveur de média SM et au moins un dispositif de communication DC, le centre de service CS et le dispositif de communication DC étant aptes à communiquer entre eux à travers un réseau de télécommunications RT.

Dans la suite de la description, le terme module peut désigner un dispositif, un logiciel ou une combinaison de matériel informatique et de logiciel, configuré pour exécuter au moins une tâche particulière.

Le réseau de télécommunications RT peut être un réseau filaire ou sans fil, ou une combinaison de réseaux filaires et de réseaux sans fil.

Selon un exemple, le réseau de télécommunications RT est un réseau de paquets à haut débit de type IP ("Internet Protocol" en anglais), tel que l'internet ou un intranet.

A titre d'exemples non limitatifs, un dispositif de communication DC est un ordinateur personnel, ou un terminal de radiocommunications cellulaire mobile, ou comprend un dispositif ou objet électronique de télécommunications qui est personnel à l'utilisateur et qui peut être un assistant numérique personnel communicant PDA ("Personnal Digital Assistant" en anglais), ou un téléphone intelligent (SmartPhone).

Plus généralement, un dispositif de communication DC peut être tout autre terminal domestique communicant portable ou non tel qu'une console de jeux vidéo portable ou de salon, ou un récepteur de télévision intelligent.

Chacun des dispositifs de communication DC est apte à communiquer avec le centre de service CS, par exemple via une liaison de type xDSL ("Digital Subscriber Line" en anglais) ou RNIS (Réseau Numérique à Intégration de Services) reliée au réseau de télécommunications RT, ou encore via un canal de radiocommunication, par exemple de type GSM ("Global System for Mobile communications" en anglais) ou UMTS ("Universal Mobile Telecommunications System" en anglais) ou LTE ("Long Term Evolution" en anglais), ou encore via une borne d'accès d'un réseau public sans fil de faible portée du type WLAN ("Wireless Local Area Network"' en anglais) ou conforme à l'une des normes 802.1x, ou de moyenne portée selon le protocole WIMAX ("World wide Interoperability Microwave Access" en anglais), relié au réseau de télécommunications.

Le réseau de télécommunications RT peut être connecté à un réseau de paquets de type IMS ("IP Multimédia Subsystem" en anglais).

Le dispositif de communication et le réseau de télécommunications ne sont pas limités aux exemples ci-dessus et peuvent être constitués par d'autres terminaux connus.

Le centre de service CS est une entité qui est gérée par une société fournissant un service donné et qui contrôle une file d'attente pour des utilisateurs en communication avec le centre de service pour accéder au service donné.

Selon une réalisation, le centre de service CS est un centre d'appel qui est apte à communiquer avec des dispositifs de communication au moyen d'une communication audio. Le centre d'appel place chaque utilisateur ayant appelé le centre d'appel en file d'attente par exemple jusqu'à ce qu'un agent de la société soit libre et prenne la communication avec l'utilisateur.

Selon une autre réalisation, le centre de service CS est un serveur intermédiaire qui est en relation avec un serveur web délivrant un service donné et qui est apte à communiquer avec des dispositifs de communication au moyen d'une communication par paquets. Le serveur intermédiaire place en file d'attente chaque utilisateur ayant fait une requête de connexion au serveur web par exemple jusqu'à ce que le serveur web dispose de suffisamment de ressources pour communiquer avec le dispositif de communication de l'utilisateur.

Le centre de service CS comprend une interface de communication INT pour communiquer avec le dispositif de communication et le serveur d'application, et pour ouvrir une session d'utilisateur et placer l'utilisateur dans une file d'attente.

Le serveur d'application SA est une entité réseau indépendante apte à communiquer avec au moins un centre de service CS, le serveur d'application étant géré par une société différente de chaque société gérant un centre de service.

Le serveur d'application SA comprend un module de communication COM et un module de gestion GES. Le serveur d'application SA est lié à une base de données BD qui est intégrée dans ce dernier ou incorporée dans un serveur de gestion de base de données relié au serveur SA par une liaison locale ou distante.

La base de données BD comprend des informations relatives à l'invention, telles que des ensembles Ensl d'identificateurs IdU d'utilisateur et des identificateurs IdS de société, ainsi que des profils d'utilisateur PrU.

Pour chaque utilisateur, le module de gestion GES mémorise dans la base de données BD un ensemble Ensl d'identificateurs IdU d'utilisateur en correspondance avec un profil d'utilisateur PrU et optionnellement avec au moins un identificateur IdS de société dans une table de correspondance TC. Optionnellement, un utilisateur peut définir un profil différent pour chaque société.

Au préalable, la société gérant le serveur d'application conclut un accord avec chaque société gérant un centre de service afin que le centre de service communique avec le serveur d'application lors de la mise en attente d'un utilisateur pour obtenir un contenu multimédia personnalisé. A cette fin, la société gérant un centre de service transmet un identificateur de société IdS à la société gérant le serveur d'application. Si plusieurs accords sont conclus, le serveur d'application SA mémorise alors une liste d'identificateur de société IdS.

Selon un exemple, pour chaque utilisateur souhaitant bénéficier du service offert par la société gérant le centre de service, des identificateurs IdU d'utilisateur et un profil d'utilisateur sont récupérés par le serveur d'application SA au moyen d'informations fournies par l'utilisateur via une communication téléphonique avec un agent de la société gérant le serveur d'application ou via une interface web contrôlée par le serveur d'application, ou encore via un serveur vocal interactif IVR ("Interactive Voice Response" en anglais).

A titre d'exemples non limitatifs, un identificateur d'utilisateur est un numéro d'appel du dispositif de communication, par exemple de type MSISDN ("Mobile Subscriber Integrated Services Digital Network Number" en anglais) dans le cas d'un terminal mobile, ou bien est un identifiant tel qu'un "login" de l'utilisateur, ou bien encore un identifiant de compte SIP ("Session Initiation Protocol" en anglais).

Le module de gestion GES du serveur d'application SA regroupe les différents identificateurs d'utilisateur IdU, le cas échéant, dans un ensemble Ensl d'identificateurs d'utilisateur.

Le profil d'utilisateur contient des souhaits ou préférences de l'utilisateur pour des types de contenus multimédias, qui peuvent être par exemple des informations récentes, des résultats sportifs, un rapport météorologique, un horoscope, ou encore un cours boursier. L'utilisateur peut également exprimer des préférences sur le format des contenus multimédias, par exemple de type audio, vidéo ou textuel, en fonction des capacités du dispositif de communication. Le contenu multimédia peut ainsi être adapté aux capacités du dispositif de communication pour un meilleur confort de visualisation ou d'écoute du contenu multimédia. Le contenu multimédia peut être aussi sélectionné et adapté en fonction des capacités du centre de service.

Le serveur d'application SA est en outre relié au serveur de média SM qui délivre des contenus multimédias CM. Ainsi, le serveur d'application SA peut indiquer au serveur de média SM un contenu multimédia CM à délivrer pour un utilisateur placé en file d'attente par un centre de service en fonction du profil de l'utilisateur. Le serveur d'application SA peut transmettre des informations de profil de l'utilisateur et sur le dispositif de communication au serveur de média SM afin que ce dernier adapte le contenu multimédia aux capacités du dispositif de communication.

Optionnellement, le serveur d'application SA utilise une information de géolocalisation pour sélectionner le contenu multimédia. L'information de géolocalisation peut être reçue depuis un serveur de localisation apte à localiser le dispositif de communication DC ou depuis le dispositif de communication DC lui-même.

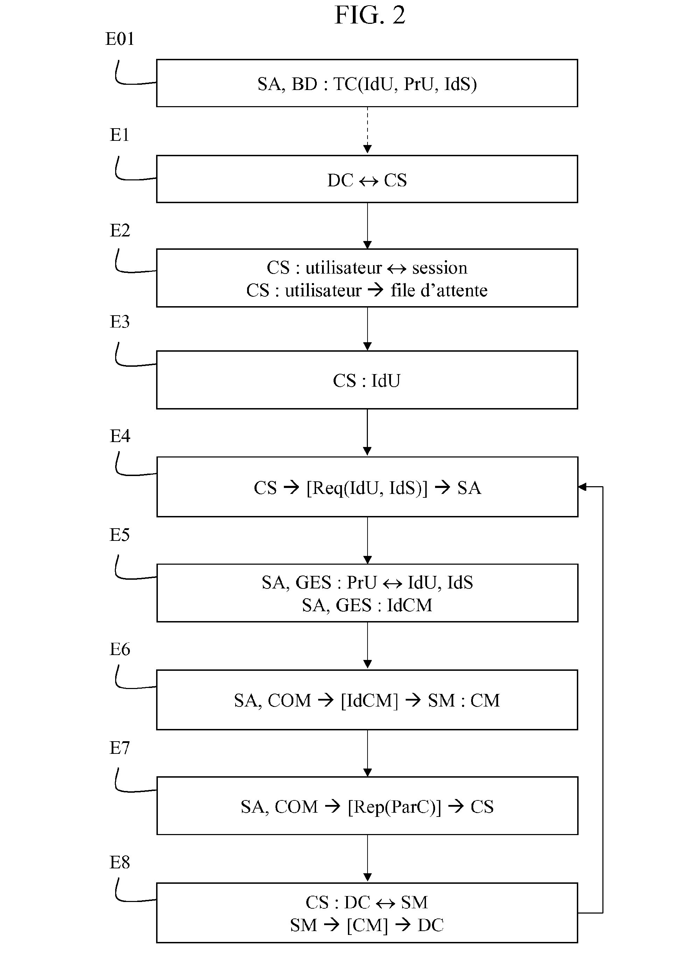

En référence à la figure 2, un procédé de contrôle de l'attente d'un utilisateur pour accéder à un service fourni via un centre de service selon une réalisation de l'invention comprend des étapes E1 à E6 exécutées dans le système de communication.

A une étape initiale E01, le serveur d'application SA mémorise dans une table de correspondance TC dans la base de données BD des ensembles Ensl d'identificateurs IdU d'utilisateur en correspondance respectivement avec des profils d'utilisateur PrU, chaque ensemble d'identificateurs d'utilisateur étant en outre optionnellement mémorisé en correspondance avec au moins un identificateur IdS de société.

A l'étape E1, l'utilisateur souhaite communiquer avec une société délivrant un service donné et lance l'établissement d'une connexion avec une entité de la société depuis le dispositif de communication.

Dans le cadre de l'invention, il est considéré que la société utilise un centre de service pour automatiquement mettre les utilisateurs en file d'attente. Une connexion est alors établie entre le dispositif de communication DC et le centre de service CS.

A l'étape E2, le centre de service CS ouvre une session d'utilisateur et place l'utilisateur dans une file d'attente. Le centre de service CS communique avec l'entité de la société afin d'être informé lorsque cette dernière est libre pour communiquer directement avec le dispositif de communication de l'utilisateur.

A l'étape E3, le centre de service CS récupère un identificateur IdU de l'utilisateur. L'identificateur d'utilisateur récupéré dépend des capacités du dispositif de communication DC de l'utilisateur et du centre de service CS.

Selon un exemple, si le centre de service CS est un centre d'appel et le dispositif de communication DC est un terminal mobile, l'identificateur d'utilisateur peut être un numéro d'appel du terminal mobile de type MSISDN détecté automatiquement.

Selon un autre exemple, si le centre de service CS est un serveur web et le dispositif de communication DC est un ordinateur personnel, l'identificateur d'utilisateur peut être un identifiant tel qu'un "login" de l'utilisateur fourni par ce dernier.

En variante, l'ordre des étapes E2 et E3 est inversé.

A l'étape E4, le centre de service CS transmet une requête Req comprenant l'identificateur IdU d'utilisateur et l'identificateur IdS de la société au serveur d'application SA. Optionnellement la requête contient en outre des informations sur des capacités du dispositif de communication DC récupérées automatiquement par exemple dans la signalisation de l'appel, dans le cas où le réseau utilisé supporte cette signalisation, tel qu'un réseau de type IMS.

A l'étape E5, le module de communication COM du serveur d'application SA reçoit la requête Req.

Le module de gestion GES du serveur d'application SA détermine dans la table de correspondance TC le profil d'utilisateur PrU associé à l'identificateur d'utilisateur IdU et optionnellement à l'identificateur de société IdS reçus.

Le module de gestion GES identifie ainsi un contenu multimédia ou un type de contenu multimédia souhaité par l'utilisateur en fonction du profil de l'utilisateur, plus particulièrement le module de gestion détermine un identificateur IdCM du contenu multimédia identifié.

A l'étape E6, le serveur d'application SA, via le module de communication COM, transmet un message Mes contenant l'identificateur IdCM de contenu multimédia au serveur de média SM pour que ce dernier récupère le contenu multimédia CM précédemment identifié et le transmette par la suite au dispositif de communication DC. Le serveur de média SM met ainsi à disposition le contenu multimédia identifié au dispositif de communication. A cette fin, le message Mes contient en outre des paramètres ParC de communication permettant au serveur de communication d'établir une communication avec le dispositif de communication DC.

Optionnellement, le serveur d'application SA transmet en outre des informations sur les capacités du dispositif de communication DC au serveur de média SM afin que ce dernier adapte le contenu multimédia aux capacités du dispositif de communication.

Optionnellement, le serveur d'application SA transmet en outre une information de géolocalisation au serveur de média SM afin que ce dernier sélectionne un contenu multimédia approprié le cas échéant en fonction de l'information de géolocalisation, par exemple un bulletin météorologique précis concernant la région où est situé l'utilisateur.

A l'étape E7, le serveur d'application SA transmet, via le module de communication COM, une réponse Rep comprenant les paramètres ParC de communication au centre de service CS.

A l'étape E8, le centre de service CS invite le dispositif de communication DC à établir une communication média avec le serveur de média SM afin que ce dernier fournisse le contenu multimédia CM au dispositif de communication DC pendant que l'utilisateur est dans la file d'attente.

Par exemple, les paramètres ParC de communication contiennent notamment un identificateur du dispositif de communication et un identificateur du serveur de média, ainsi que des informations sur le protocole à utiliser pour établir la communication média entre le dispositif de communication et le serveur de média.

Si l'utilisateur est toujours dans la file d'attente lorsque la lecture du contenu multimédia est terminée, le procédé peut être répété depuis l'étape E4.

Ainsi, pendant que l'utilisateur est dans la file d'attente, la signalisation est contrôlée par le centre de service CS, tandis qu'une communication média est établie entre le dispositif de communication et le serveur de média.

Lorsque l'utilisateur est libéré de la file d'attente, le centre de service prévient le serveur d'application SA que la communication média avec le serveur de média va être coupée et invite par ailleurs le dispositif de communication à terminer la communication média avec le serveur de média et rétablir une communication média avec le centre de service, la connexion initialement établie à l'étape E1 pouvant être considérée comme une communication média.

L'invention décrite ici concerne un procédé, un centre de service et un serveur pour contrôler l'attente d'un utilisateur pour accéder à un service fourni via le centre de service. Selon une implémentation de l'invention, les étapes du procédé de l'invention sont déterminées par les instructions de programmes d'ordinateur incorporés dans le centre de service et dans un serveur, tel que le serveur d'application SA. Chaque programme comporte des instructions de programme, qui lorsque ledit programme est chargé et exécuté dans le centre de service, respectivement dans le serveur, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour contrôler un temps d'attente pour un utilisateur d'un dispositif de communication (DC) communiquant avec un centre de service (CS) à travers un réseau de télécommunications (RT) pour accéder à un service fourni via le centre de service (CS), le procédé comprenant les étapes suivantes dans le centre de service (CS):
suite à une connexion établie entre le dispositif de communication (DC) et le centre de service (CS), ouvrir (E2) une session d'utilisateur et placer l'utilisateur dans une file d'attente,
récupérer (E3) un identificateur (IdU) de l'utilisateur,
transmettre (E4) une requête (Req) comprenant l'identificateur (IdU) d'utilisateur à un serveur d'application (SA), afin que le serveur d'application détermine dans une table de correspondance (TC) un profil d'utilisateur (PrU) associé à l'identificateur d'utilisateur (IdU) reçu, détermine un identificateur (IdCM) de contenu multimédia (CM) en fonction du profil d'utilisateur (PrU) et transmette (E6) l'identificateur (IdCM) de contenu multimédia au serveur de média (SM) pour mettre à disposition le contenu multimédia (CM) identifié au dispositif de communication,
recevoir (E7) une réponse (Rep) comprenant des paramètres (ParC) de communication depuis le serveur d'application (SA),
inviter (E8) le dispositif de communication (DC) à établir une communication avec le serveur de média (SM) apte à fournir le contenu multimédia (CM) au dispositif de communication (DC) pendant que l'utilisateur est dans la file d'attente.

2. Procédé conforme à la revendication 1, selon lequel la requête (Req) contient en outre des informations sur des capacités du dispositif de communication (DC) et le serveur d'application (SA) transmet en outre lesdites informations sur les capacités du dispositif de communication (DC) au serveur de média (SM) afin que ce dernier adapte le contenu multimédia aux capacités du dispositif de communication (DC).

3. Procédé pour contrôler un temps d'attente pour un utilisateur d'un dispositif de communication (DC) communiquant avec un centre de service (CS) à travers un réseau de télécommunications (RT) pour accéder à un service fourni via le centre de service (CS), le procédé comprenant les étapes suivantes dans un serveur d'application (SA) relié au centre de service (CS):
suite à une connexion établie entre le dispositif de communication (DC) et le centre de service (CS), après que le centre de service (CS) a ouvert (E2) une session d'utilisateur, placé l'utilisateur dans une file d'attente, et récupéré (E3) un identificateur (IdU) de l'utilisateur, recevoir (E4) une requête (Req) depuis le centre de service (SC), la requête (Req) comprenant l'identificateur (IdU) d'utilisateur,
déterminer (E5) dans une table de correspondance (TC) un profil d'utilisateur (PrU) associé à l'identificateur d'utilisateur (IdU) reçu et déterminer un identificateur (IdCM) de contenu multimédia (CM) en fonction du profil d'utilisateur (PrU),
transmettre (E6) l'identificateur (IdCM) de contenu multimédia au serveur de média (SM) pour mettre à disposition le contenu multimédia (CM) identifié au dispositif de communication,
transmettre (E7) une réponse (Rep) comprenant des paramètres (ParC) de communication au centre de service (CS), afin que ce dernier invite le dispositif de communication (DC) à établir une communication avec le serveur de média (SM) apte à fournir le contenu multimédia (CM) au dispositif de communication (DC) pendant que l'utilisateur est dans la file d'attente.

4. Procédé conforme à la revendication 3, selon lequel le serveur d'application (SA) transmet en outre une information de géolocalisation au serveur de média (SM) afin que ce dernier sélectionne un contenu multimédia en fonction de l'information de géolocalisation.

5. Procédé conforme à la revendication 3 ou 4, selon lequel la requête (Req) comprend en outre un identificateur (IdS) de la société gérant le centre de service, et le profil d'utilisateur (PrU) déterminé est en outre associé à l'identificateur (IdS) de la société dans la table de correspondance.

6. Centre de service (CS) pour contrôler un temps d'attente pour un utilisateur d'un dispositif de communication (DC) communiquant avec le centre de service (CS) à travers un réseau de télécommunications (RT) pour accéder à un service fourni via le centre de service (CS), le centre de service (CS) comprenant :
des moyens (INT) pour ouvrir une session d'utilisateur et placer l'utilisateur dans une file d'attente, suite à une connexion établie entre le dispositif de communication (DC) et le centre de service (CS),
des moyens (INT) pour récupérer un identificateur (IdU) de l'utilisateur,
des moyens (INT) pour transmettre une requête (Req) comprenant l'identificateur (IdU) d'utilisateur à un serveur d'application (SA), afin que le serveur d'application détermine dans une table de correspondance (TC) un profil d'utilisateur (PrU) associé à l'identificateur d'utilisateur (IdU) reçu, détermine un identificateur (IdCM) de contenu multimédia (CM) en fonction du profil d'utilisateur (PrU) et transmette l'identificateur (IdCM) de contenu multimédia au serveur de média (SM) pour mettre à disposition le contenu multimédia (CM) identifié au dispositif de communication,
des moyens (INT) pour recevoir une réponse (Rep) comprenant des paramètres (ParC) de communication depuis le serveur d'application (SA),
des moyens (INT) pour inviter le dispositif de communication (DC) à établir une communication avec le serveur de média (SM) apte à fournir le contenu multimédia (CM) au dispositif de communication (DC) pendant que l'utilisateur est dans la file d'attente.

7. Centre de service (CS) conforme à la revendication 6, selon lequel le centre de service (CS) est un centre d'appel ou un serveur web.

8. Serveur d'application (SA) pour contrôler un temps d'attente pour un utilisateur d'un dispositif de communication (DC) communiquant avec un centre de service (CS) à travers un réseau de télécommunications (RT) pour accéder à un service fourni via le centre de service (CS), le serveur d'application (SA) étant relié au centre de service (CS) et comprenant :
des moyens (COM) pour recevoir une requête (Req) depuis le centre de service (SC), suite à une connexion établie entre le dispositif de communication (DC) et le centre de service (CS), après que le centre de service (CS) a ouvert une session d'utilisateur, placé l'utilisateur dans une file d'attente, et récupéré un identificateur (IdU) de l'utilisateur, la requête (Req) comprenant l'identificateur (IdU) d'utilisateur,
des moyens (GES) pour déterminer dans une table de correspondance (TC) un profil d'utilisateur (PrU) associé à l'identificateur d'utilisateur (IdU) reçu et déterminer un identificateur (IdCM) de contenu multimédia (CM) en fonction du profil d'utilisateur (PrU),
des moyens (COM) pour transmettre l'identificateur (IdCM) de contenu multimédia au serveur de média (SM) pour mettre à disposition le contenu multimédia (CM) identifié au dispositif de communication,
des moyens (COM) pour transmettre une réponse (Rep) comprenant des paramètres (ParC) de communication au centre de service (CS), afin que ce dernier invite le dispositif de communication (DC) à établir une communication avec le serveur de média (SM) apte à fournir le contenu multimédia (CM) au dispositif de communication (DC) pendant que l'utilisateur est dans la file d'attente.

9. Programme d'ordinateur apte à être mis en oeuvre dans un centre de service (CS) pour contrôler un temps d'attente pour un utilisateur d'un dispositif de communication (DC) communiquant avec le centre de service (CS) à travers un réseau de télécommunications (RT) pour accéder à un service fourni via le centre de service (CS), ledit programme étant **caractérisé en ce qu'**il comprend des instructions qui, lorsque le programme est chargé et exécuté dans ledit serveur d'application, réalisent les étapes suivantes :
suite à une connexion établie entre le dispositif de communication (DC) et le centre de service (CS), ouvrir (E2) une session d'utilisateur et placer l'utilisateur dans une file d'attente,
récupérer (E3) un identificateur (IdU) de l'utilisateur,
transmettre (E4) une requête (Req) comprenant l'identificateur (IdU) d'utilisateur à un serveur d'application (SA), afin que le serveur d'application détermine dans une table de correspondance (TC) un profil d'utilisateur (PrU) associé à l'identificateur d'utilisateur (IdU) reçu, détermine un identificateur (IdCM) de contenu multimédia (CM) en fonction du profil d'utilisateur (PrU) et transmette (E6) l'identificateur (IdCM) de contenu multimédia au serveur de média (SM) pour mettre à disposition le contenu multimédia (CM) identifié au dispositif de communication,
recevoir (E7) une réponse (Rep) comprenant des paramètres (ParC) de communication depuis le serveur d'application (SA),
inviter (E8) le dispositif de communication (DC) à établir une communication avec le serveur de média (SM) apte à fournir le contenu multimédia (CM) au dispositif de communication (DC) pendant que l'utilisateur est dans la file d'attente.

10. Programme d'ordinateur apte à être mis en oeuvre dans un serveur d'application (SA) pour contrôler un temps d'attente pour un utilisateur d'un dispositif de communication (DC) communiquant avec un centre de service (CS) à travers un réseau de télécommunications (RT) pour accéder à un service fourni via le centre de service (CS), le d'application (SA) relié au centre de service (CS), ledit programme étant **caractérisé en ce qu'**il comprend des instructions qui, lorsque le programme est chargé et exécuté dans ledit serveur d'application, réalisent les étapes suivantes :
suite à une connexion établie entre le dispositif de communication (DC) et le centre de service (CS), après que le centre de service (CS) a ouvert (E2) une session d'utilisateur, placé l'utilisateur dans une file d'attente, et récupéré (E3) un identificateur (IdU) de l'utilisateur, recevoir (E4) une requête (Req) depuis le centre de service (SC), la requête (Req) comprenant l'identificateur (IdU) d'utilisateur,
déterminer (E5) dans une table de correspondance (TC) un profil d'utilisateur (PrU) associé à l'identificateur d'utilisateur (IdU) reçu et déterminer identificateur (IdCM) de contenu multimédia (CM) en fonction du profil d'utilisateur (PrU),
transmettre (E6) identificateur (IdCM) de contenu multimédia au serveur de média (SM) pour mettre à disposition le contenu multimédia (CM) identifié au dispositif de communication,
transmettre (E7) une réponse (Rep) comprenant des paramètres (ParC) de communication au centre de service (CS), afin que ce dernier invite le dispositif de communication (DC) à établir une communication avec le serveur de média (SM) apte à fournir le contenu multimédia (CM) au dispositif de communication (DC) pendant que l'utilisateur est dans la file d'attente.
